(19) 

**Europäisches Patentamt**
**European Patent Office**
**Office européen des brevets**

(11) **EP 4 447 250 A1**

(12) **EUROPEAN PATENT APPLICATION**
published in accordance with Art. 153(4) EPC

(43) Date of publication:
**16.10.2024 Bulletin 2024/42**

(21) Application number: **22905697.3**

(22) Date of filing: **14.03.2022**

(51) International Patent Classification (IPC):
***H02J 3/24*** *(2006.01)*

(52) Cooperative Patent Classification (CPC):
**H02J 3/16; H02J 3/24; H02J 3/38;** Y02E 10/76

(86) International application number:
**PCT/CN2022/080625**

(87) International publication number:
**WO 2023/108926 (22.06.2023 Gazette 2023/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2021 CN 202111535560**

(71) Applicant: **GOLDWIND SCIENCE & TECHNOLOGY CO., LTD.**
**Xinjiang 830026 (CN)**

(72) Inventors:
- GUO, Rui
  **Beijing 100176 (CN)**
- YU, Xiao
  **Beijing 100176 (CN)**
- LIU, Chuang
  **Beijing 100176 (CN)**

(74) Representative: **Gulde & Partner**
**Patent- und Rechtsanwaltskanzlei mbB**
**Wallstraße 58/59**
**10179 Berlin (DE)**

(54) **CONTROL METHOD AND CONTROL APPARATUS FOR VOLTAGE-SOURCE-TYPE WIND TURBINE GENERATOR SYSTEM**

(57) Provided in the present disclosure are a control method and control apparatus for a voltage-source-type wind turbine generator system. The control method comprises: determining a virtual angular frequency deviation by means of a virtual inertia damping link, wherein parameters of the virtual inertia damping link are determined on the basis of a moment of inertia and a damping coefficient of a wind turbine generator of a wind turbine generator system; determining a virtual inner potential phase; determining a d-axis component and a q-axis component of a modulation voltage; and controlling a grid-side converter of the wind turbine generator system, so as to adjust an injection voltage of a grid-connected point of the wind turbine generator system.

Determine a virtual angular frequency deviation $\Delta\omega$ by means of a virtual inertial damping link, based on a deviation between a measured value of a DC bus voltage $u_{dc}$ of the wind turbine system and a reference value of the DC bus voltage $u_{dcref}$ of the wind turbine system, a torque demand value $T_{demand}^*$ of the wind turbine generator and a rotational speed $\omega_w$ of the wind turbine generator, and a grid-connected voltage $u_{dq}$ in the dq coordinate system and a filter inductance current $i_{dq}$ in the dq coordinate system — S101

Determine a virtual internal potential phase $\theta$ based on the virtual angular frequency deviation $\Delta\omega$ — S102

Determine a d-axis component $u_{md}$ and a q-axis component $u_{mq}$ of a modulated voltage based on a set value of a reactive power Q0, a measured value of the reactive power Q, and an amplitude $U_0$ of a rated voltage of a grid — S103

Control the grid-side converter of the wind turbine system based on the virtual internal potential phase $\theta$, and the d-axis component $u_{md}$ and the q-axis component umq of the modulated voltage, to adjust an injection voltage at a grid connection point of the wind turbine system — S104

**Figure 1**

**EP 4 447 250 A1**

**Description**

**FIELD**

The present disclosure relates to the field of wind power generation, and in particular, to a method and apparatus for controlling a voltage-source-type wind turbine generator system.

**BACKGROUND**

A wind turbine generator is a device that converts wind energy into electrical energy. Generally, a direct drive or semi-direct drive wind turbine generator is connected to a grid by using a full power converter. The full power converter may include a machine-side converter and a grid-side converter. The machine-side converter converts an alternating current power output from the wind turbine generator into a direct current power, and the grid-side converter converts the direct current power into the alternating current power for grid connecting. In order to ensure a stable operation of the full power converter, it is necessary to control a direct current bus voltage between the machine-side converter and the grid-side converter.

There are two grid connected control modes for the full-power converter. One is a grid-following mode, and the other is a grid-forming mode. In the grid-following mode, a phase-locking technology is used to track a phase of a grid voltage by collecting the grid voltage. An active power control is performed by injecting an active current that is in phase with the grid voltage, and a reactive power control is performed by injecting a reactive current that is 90 degrees different from the phase of the grid voltage. The grid-forming mode is the same as a grid connection technology for a synchronous generator. In the grid-forming mode, a rotor motion equation of the synchronous generator is simulated to synchronize with the grid based on an acceleration and deceleration of a rotor. An active power control is performed by adjusting a phase difference (power angle) between an output voltage of a full power converter and a grid voltage, and a reactive power control is performed through an amplitude difference between the output voltage of the full power converter and the grid voltage. Due to the similarity of grid connection characteristics between the grid-forming mode and the synchronous generator, the grid-forming mode can better support operation of the grid.

At present, there are two main manners for the full power converter to operate in the grid-forming mode. In a first manner, the machine-side converter controls the direct current bus voltage, and the grid-side converter receives a power given by a wind turbine generator system, simulates the rotor motion equation of the synchronous generator, and adjusts an output phase, to achieve the active power control. However, in this case, the control of the direct current bus voltage by the machine-side converter is involved. Due to the wind turbine generator, connected to the machine-side converter, being variable-speed, it may be difficult to control the direct current bus voltage in practice, and even cause control instability under certain operating conditions. In a second manner, the machine-side converter executes a torque given by a master controller of the wind turbine generator, and the grid-side converter simulates the rotor motion equation of the synchronous generator through a closed-loop control of the direct current bus voltage and adjusts the output phase, to achieve the active power control. However, in this case, the control of the direct current bus voltage by the grid-side converter is involved, and dynamic characteristics of the direct current bus voltage needs to be considered in actual simulation of the rotor motion equation of the synchronous generator.

Furthermore, in the simulation of the rotor motion equation of the synchronous generator, two parameters are involved, namely, an inertia coefficient and a damping coefficient. These two parameters are completely set artificially and do not have a clear physical correspondence, making it impossible to match an actual operation control of the wind turbine generator. In this case, if there is no actual energy reserve (for example, rotational energy reserve on the machine side) or an inertia response requirement is inconsistent with the actual energy reserve, it will lead to an excessive energy absorption or release from the direct current side during an inertia response process, resulting in an unstable actual operation control of the wind turbine generator.

**SUMMARY**

An objective of embodiments of the present disclosure is to provide a method and apparatus for controlling a voltage-source-type wind turbine generator, which enables an inertia coefficient and damping coefficient of a virtual synchronous generator to reflect a true inertia level and damping level of a rotor motion of the wind turbine generator.

In an aspect, a method for controlling a voltage-source-type wind turbine generator system is provided. The method includes: determining a virtual angular frequency deviation by means of a virtual inertial damping link, based on a deviation between a measured value of a direct current bus voltage of the wind turbine generator system and a reference value of the direct current bus voltage of the wind turbine generator system, where one or more parameters of the virtual inertial damping link is determined based on a rotational inertia and a damping coefficient of a wind turbine generator of the wind turbine generator system; determining a virtual internal potential phase based on the virtual angular frequency deviation; determining a d-axis component and a q-axis component of a modulated voltage based on a set value of a reactive power of the wind turbine generator system, a measured value of the reactive power of the wind turbine generator system, and an amplitude of a rated voltage of a grid; and controlling a grid-side converter of the wind turbine generator system based on the virtual internal potential phase and the d-axis component and the q-axis component of the modulated voltage, to adjust an injection voltage at a grid connection point of the wind turbine generator system.

In another aspect, an apparatus for controlling a voltage-source-type wind turbine generator system is provided. The apparatus includes: a virtual angular frequency deviation determination unit, configured to determine a virtual angular frequency deviation by means of a virtual inertial damping link, based on a deviation between a measured value of a direct current bus voltage of the wind turbine generator system and a reference value of the direct current bus voltage of the wind turbine generator system, where one or more parameters of the virtual inertial damping link is determined based on a rotational inertia and a damping coefficient of a wind turbine generator of the wind turbine generator system; a virtual internal potential phase determination unit, configured to determine a virtual internal potential phase based on the virtual angular frequency deviation; a modulated voltage obtaining unit, configured to determine a d-axis component and a q-axis component of a modulated voltage based on a set value of a reactive power of the wind turbine generator system, a measured value of the reactive power of the wind turbine generator system, and an amplitude of a rated voltage of a grid; and a grid-side converter control unit, configured to control a grid-side converter of the wind turbine generator system based on the virtual internal potential phase and the d-axis component and the q-axis component of the modulated voltage, to adjust an injection voltage at a grid connection point of the wind turbine generator system.

In another aspect, a computer-readable storage medium storing a computer program is provided. The computer program, when executed by a processor, performs the above method for controlling a voltage-source-type wind turbine generator system.

In another aspect, a computing device is provided. The computing device includes: a processor; and a memory storing a computer program, where the computer program, when executed by the processor, performs the above method for controlling a voltage-source-type wind turbine generator system.

In another aspect, a voltage-source-type wind turbine generator system is provided. The voltage-source-type wind turbine generator system includes the above apparatus for controlling the voltage-source-type wind turbine generator system or the above computing device.

With the method and apparatus for controlling a voltage-source-type wind turbine generator system according to embodiments of the present disclosure, the rotor motion equation of the wind turbine generator is analogized to the control strategy of the grid-side converter, achieving the consistency between the rotor motion equation of the virtual synchronous generator and the rotor motion equation of the real wind turbine generator, thereby mapping the real-time rotor motion characteristics of the wind turbine generator to the control strategy of the grid-side converter. In addition, with the method and apparatus according to the embodiments of the present disclosure, by paralleling the phase adjustment function of the analogized rotor motion equation of the virtual synchronous generator with the phase adjustment function of the direct current bus voltage, while achieving the function of the virtual synchronous generator, it has the function of stabilizing the direct current bus voltage and achieves good collaborative control effect without the need for additional devices to stabilize the direct current bus voltage.

## BRIEF DESCRIPTION OF THE DRAWINGS

The above and other purposes and features of the present disclosure will become clearer from the following description in conjunction with the accompanying drawings.

Figure 1 is a flowchart of a method for controlling a voltage-source-type wind turbine generator system according to an embodiment of the present disclosure;

Figure 2 is a schematic block diagram of a method for controlling a voltage-source-type wind turbine generator system according to an embodiment of the present disclosure;

Figure 3 is a block diagram of an apparatus for controlling a voltage-source-type wind turbine generator system according to an embodiment of the present disclosure; and

Figure 4 is a block diagram of a computing device according to an embodiment of the present disclosure.

## DETAILED DESCRIPTION

Specific embodiments are provided below to help to obtain a comprehensive understanding of the method, apparatus and/or system described herein. After understanding the present disclosure, various changes, modifications, and equivalents of the method, apparatus, and/or system described herein will be clear. For example, an order of operations described herein is only an example and is not limited to those described here. The order of operations may be changed as would be clear after understanding the present disclosure, except for operations that must occur in a specific order. In addition, for clarity and conciseness, description of features known in the art may be omitted.

The features described herein may be implemented in different forms and should not be limited to the examples described here. On the contrary, the examples described here are provided to illustrate only some of the feasible ways of implementing the method, apparatus, and/or system described here, many of which will be clear after understanding the present disclosure.

As used herein, terms "and/or" includes any one of listed items associated with the term, and any combination of any two or more of the items.

Although terms "first," "second," "third" and the like can be used herein to describe various components, elements, regions, layers, or parts, these components, elements, regions, layers, or parts should not be limited by these terms. On the contrary, these terms are only used to distinguish one component, element, region, layer, or part from another component, component, region, layer, or part. Therefore, without departing from the teachings of the examples, a first component, a first element, a first region, a first layer, or a first part referred to in the examples described herein may be referred to as a second component, a second element, a second region, a second layer, or a second part.

In the specification, when an element (such as a layer, region, or substrate) is described as being "on", "connected to" or "coupled to" another element, that element may be directly "on", "connected to" or "coupled to" the other element, or there may be one or more other intermediate element between them. On the contrary, when an element is described as being "directly on", "directly connected to" or "directly coupled to" another element, there may be no other intermediate element between them.

The terms used herein are only for describing various examples and are not intended to limit the present disclosure. Unless the context clearly indicates otherwise, a singular form is intended to include a plural form. Terms "include", "comprise", and "have" indicate the existence of a narrative feature, quantity, operation, component, element, and/or combination thereof, but do not exclude existence or addition of one or more other features, quantities, operations, components, elements, and/or combinations thereof.

Unless otherwise defined, all terms used herein (including technical terms and scientific terms) have the same meanings as those commonly understood by those skilled in the field to which the present disclosure belongs after understanding the present disclosure. Unless explicitly defined otherwise, terms (such as those defined in a general dictionary) should be interpreted as having meanings consistent with their respective contexts in the relevant field and in the present disclosure, and should not be idealized or overly formalized.

In addition, in the description of the examples, when it is believed that a detailed description of the well-known relevant structures or functions may lead to a vague interpretation of the present disclosure, such detail description will be omitted.

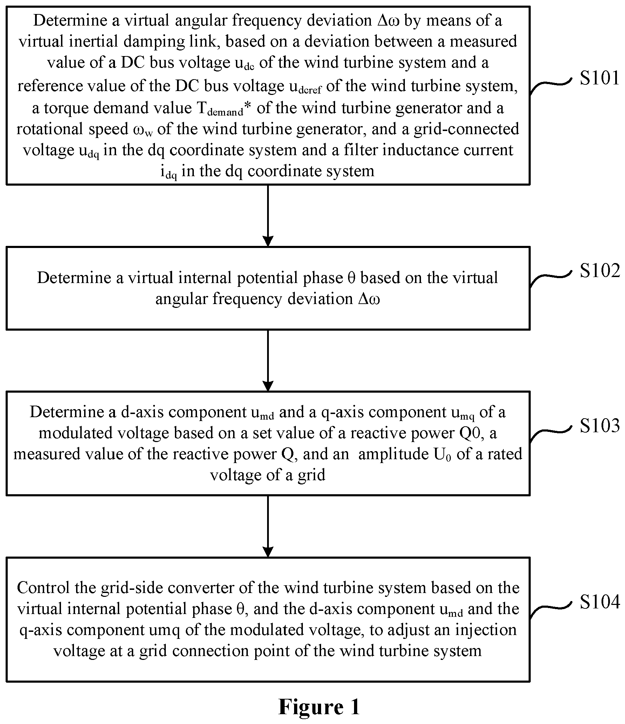

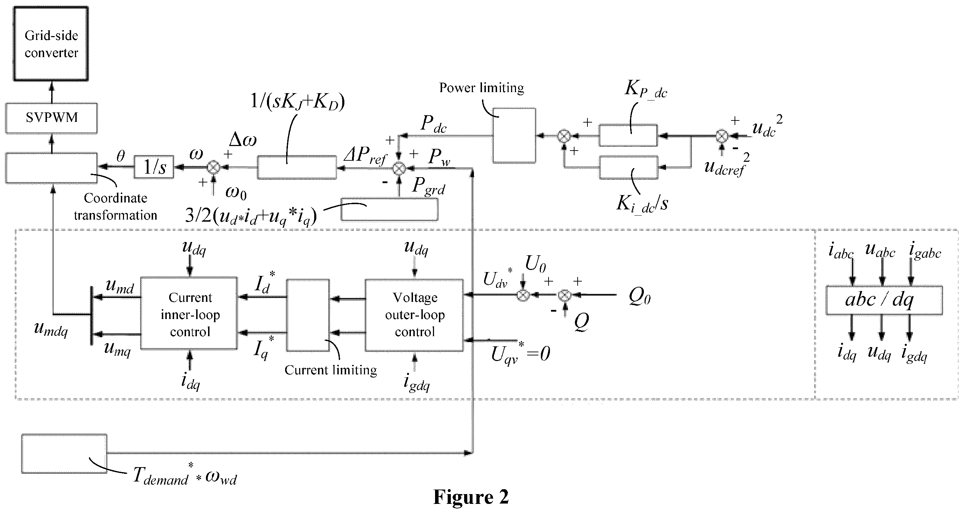

Figure 1 is a flowchart of a method for controlling a voltage-source-type wind turbine generator system according to an embodiment of the present disclosure. Figure 2 is a schematic block diagram of a method for controlling a voltage-source-type wind turbine generator system according to an embodiment of the present disclosure. The method for controlling a voltage-source-type wind turbine generator system according to an embodiment of the present disclosure may be executed by a master controller, a converter controller, or another dedicated controller of the wind turbine generator system.

Reference is made to Figure 1 and Figure 2. In step S101, a virtual angular frequency deviation $\Delta\omega$ is determined by means of a virtual inertial damping link, based on a deviation between a measured value of a direct current (DC) bus voltage $u_{dc}$ of the wind turbine generator system and a reference value of the DC bus voltage $u_{dcref}$ of the wind turbine generator system. One or more parameters of the virtual inertial damping link may be determined based on a rotational inertia and a damping coefficient of a wind turbine generator of the wind turbine generator system.

Referring to Figure 2, the deviation between the measured value of the DC bus voltage of the wind turbine generator system and the reference value of the DC bus voltage may be a difference or squared difference between the measured value of the DC bus voltage and the reference value of the DC bus voltage. It is not limited thereto and the deviation may be in other forms. As shown in Figure 2, a squared difference (i.e., $u_{dc}^2 - u_{dcref}^2$) between the measured value of the DC bus voltage $u_{dc}$ and the reference value of the DC bus voltage $u_{dref}$ is described as an example, but the present disclosure is not limited thereto.

Specifically, a proportional integral (PI) operation may be performed on the deviation between the measured value of the DC bus voltage $u_{dc}$ of the wind turbine generator system and the reference value of the DC bus voltage $u_{dcref}$ of the wind turbine generator system, to obtain a set value of a DC bus power $P_{DC}$. As shown in Figure 2, a proportional operation link is represented as $K_{P\_DC}$, and an integral operation link is represented as $K_{i\_dc}/s$, where $K_{P\_DC}$ represents a proportional coefficient and $K_{i\_dc}$ represents an integral coefficient. In addition, a power demand $P_w$ of the wind turbine generator may be obtained based on a torque demand value $T_{demand}^*$ of the wind turbine generator and a rotational speed (for example, angular velocity) $\omega_w$ of the wind turbine generator. A grid-side power $P_{grd}$ of the grid-side converter of the wind turbine generator system may be obtained based on a grid-connected voltage $u_{dq}$ in a dq coordinate system and a filter inductance current $i_{dq}$ in the dq coordinate system. For example, the power demand $P_w$ of the wind turbine generator may be calculated as a product of the torque demand value $T_{demand}^*$ of the wind turbine generator and the rotational speed $\omega_w$ of the wind turbine generator. In addition, a product of a d-axis component $u_d$ of the grid-connected voltage $u_{dq}$ in the dq coordinate system and a d-axis component $i_d$ of the grid-connected current $i_{dq}$ may be obtained, and a product of a q-axis component $u_q$ of the grid-connected voltage $u_{dq}$ in the dq coordinate system and a q-axis component $i_q$ of the grid-connected current $i_{dq}$ may be obtained. A sum of the two products is calculated and then multiplied by a predetermined coefficient to obtain the grid-side power $P_{grd}$ of the grid-side converter of the wind turbine generator system. Here, the predetermined coefficient may be, for example, 3/2. Then, a first active power deviation $\Delta P_{ref}$ may be determined based on the set value of the DC bus power $P_{DC}$, the power demand $P_w$ of the wind turbine generator and the grid-side power $P_{grd}$ of the grid-side converter of the wind turbine generator system. For example, the first active power deviation $\Delta P_{ref}$ may be obtained by calculating a sum of the set value of the DC bus power $P_{DC}$ and the power demand $P_w$ of the wind turbine generator and subtracting the grid-side power $P_{grd}$ of the grid-side converter of the wind turbine generator system from the sum. Finally, the virtual angular frequency deviation $\Delta\omega$ is determined by inputting the first active power deviation $\Delta P_{ref}$ into the virtual inertial damping link. As shown in Figure 2, a coordinate transformation (for example, Clark-Parker transformation, i.e., abc/dq transformation) may be performed on a grid-side filter inductance current $i_{abc}$, a grid-connected voltage $u_{abc}$, and a grid-connected current $i_{gabc}$, to obtain the filter inductance current $i_{dq}$ in the dq coordinate system, the grid-connected voltage $u_{dqc}$ in the dq coordinate system, and a grid-connected current $i_{gdq}$ in the dq coordinate system.

In an implementation, a power limiting module may be configured after the proportional and integral operation link, to limit the set value of the DC bus power $P_{DC}$ obtained through the proportional and integral operation link.

According to an embodiment of the present disclosure, the virtual inertia damping link may be expressed as $1/(s\,K_J + K_D)$, where $K_J$ represents a virtual inertia coefficient and $K_D$ represents a virtual damping coefficient. In other words, parameters of the virtual inertia damping link may include the virtual inertia coefficient $K_J$ and the virtual damping coefficient $K_D$. According to an embodiment of the present disclosure, the virtual inertia coefficient $K_J$ and the virtual damping coefficient $K_D$ may be determined based on a rotational inertia $J_w$ and a damping coefficient $D_w$ of the wind turbine generator by mapping the rotor motion equation of the wind turbine generator to the rotor motion equation of the virtual synchronous generator of the grid-side converter. This will be described in detail later.

In another aspect, after the proportional integral (PI) operation is performed on the deviation between the measured value of the DC bus voltage $u_{dc}$ of the wind turbine generator system and the reference value of the DC bus voltage $u_{dcref}$ of the wind turbine generator system, and the set value of the DC bus power $P_{DC}$ is obtained, the set value of the DC bus power $P_{DC}$ may be directly inputted into the virtual inertia damping link to determine a first intermediate virtual angular frequency deviation. In addition, the power demand $P_w$ of the wind turbine generator may be obtained based on the torque demand value $T_{demand}^*$ of the wind turbine generator and the rotational speed (for example, angular velocity) $\omega_w$ of the wind turbine generator. The grid-side power $P_{grd}$ of the grid-side converter of the wind turbine generator system may be obtained based on the grid-connected voltage $u_{dq}$ in the dq coordinate system and the filter inductance current $i_{dq}$ in the dq coordinate system. Then, a second active power deviation may be determined based on the power demand $P_w$ of the wind turbine generator and the grid-side power $P_{grd}$ of the grid-side converter of the wind turbine generator system. For example, the second active power deviation may be determined as a difference between the power demand $P_w$ of the wind turbine generator and the grid-side power $P_{grd}$ of the grid-side converter of the wind turbine generator system. Then, a second intermediate virtual angular frequency deviation may be determined by inputting the second active power deviation into the virtual inertial damping link. Finally, the virtual angular frequency deviation $\Delta\omega$ may be determined based on the first intermediate virtual angular frequency deviation and the second intermediate virtual angular frequency deviation. For example, the virtual angular frequency deviation $\Delta\omega$ may be determined as a sum of the first intermediate virtual angular frequency deviation and the second intermediate virtual angular frequency deviation.

In a next step S102, a virtual internal potential phase $\theta$ is determined based on the virtual angular frequency deviation $\Delta\omega$. Reference is made to Figure 2. A virtual angular frequency $\omega$ is determined based on the virtual angular frequency deviation $\Delta\omega$ and a rated angular frequency $\omega_0$ of the grid. The virtual internal potential phase $\theta$ may be determined based on the virtual angular frequency $\omega$. As shown in Figure 2, the virtual angular frequency $\omega$ is determined by summing the virtual angular frequency deviation $\Delta\omega$ and the rated angular frequency $\omega_0$ of the grid. Then, the virtual internal potential phase $\theta$ is determined through integration on the virtual angular frequency $\omega$.

In an implementation, in step S103, a d-axis component $u_{md}$ of a modulated voltage and a q-axis component $u_{mq}$ of the modulated voltage are determined based on a set value of a reactive power $Q_0$ of the wind turbine generator system, a measured value of the reactive power $Q$ of the wind turbine generator system, and an amplitude $U_0$ of a rated voltage of the grid. It should be noted that step S103 is not necessarily to be performed after step S101 and step S102, but may be performed in parallel with step S101 and step S102, or before step S101 and step S102.

Specifically, a disturbance component of an alternating current (AC) bus voltage may be first determined based on the set value of the reactive power $Q_0$ of the wind turbine generator system and the measured value of the reactive power Q of the wind turbine generator system. For example, the disturbance component of the AC bus voltage may be determined as a difference between the set value of the reactive power $Q_0$ and the measured value of the reactive power Q. A d-axis component $U_{dv}^*$ of a grid-connected reference voltage in the dq coordinate system is then determined based on the disturbance of the AC bus voltage and an amplitude $U_0$ of a rated voltage of an AC grid. For example, the d-axis component $U_{dv}^*$ of the grid-connected reference voltage in the dq coordinate system is determined as a sum of the disturbance of the AC bus voltage and the amplitude $U_0$ of the rated voltage of the AC grid. In another aspect, a q-axis component $U_{qv}^*$ of the grid-connected reference voltage in the dq coordinate system may be set to zero. Finally, the d-axis component $u_{md}$ of the modulated voltage and the q-axis component $u_{mq}$ of the modulated voltage may be determined based on the d-axis component $U_{dv}^*$ and the q-axis component $U_{qv}^*$ of the grid-connected reference voltage in the dq coordinate system.

Further, the d-axis component $u_{md}$ and the q-axis component $u_{mq}$ of the modulated voltage may be obtained by: performing merely a voltage outer-loop control on the d-axis component $U_{dv}^*$ and the q-axis component $U_{qv}^*$ of the grid-connected reference voltage in the dq coordinate system, or performing the voltage outer-loop control and a current inner-loop control on the d-axis component $U_{dv}^*$ and the q-axis component $U_{qv}^*$ of the grid-connected reference voltage in the dq coordinate system.

For example, as shown in Figure 2, the d-axis component $U_{dv}^*$ and the q-axis component $U_{qv}^*$ of the grid-connected reference voltage in the dq coordinate system may be inputted into a voltage outer-loop control module. In addition, the grid-connected voltage $u_{dq}$ in the dq coordinate system and the grid-connected current $i_{gdq}$ in the dq coordinate system may be inputted into the voltage outer-loop control module. The voltage outer-loop control module may perform the voltage outer-loop control on the d-axis component $U_{dv}^*$ and the q-axis component $U_{qv}^*$ of the grid-connected reference voltage in the dq coordinate system to obtain a d-axis reference filter inductance current $I_d^*$ and a q-axis reference filter inductance current $I_q^*$. The d-axis reference filter inductance current $I_d^*$ and the q-axis reference filter inductance current $I_q^*$ may be inputted into a current inner-loop control module. In addition, the grid-connected voltage $u_{dq}$ in the dq coordinate system and the filter inductance current $i_{dq}$ in the dq coordinate system may be inputted into the current inner-loop control module. The current inner-loop control module may perform the current inner-loop control on the d-axis reference filter inductance current $I_d^*$ and the q-axis reference filter inductance current $I_q^*$ to obtain the d-axis component $u_{md}$ and the q-axis component $u_{mq}$ of the modulated voltage.

In an implementation, a current limiting module may be configured between the voltage outer-loop control module and the current inner-loop control module, to limit an amplitude of a current output from the voltage outer-loop control module.

In addition, with an appropriate modification to the voltage outer-loop control module as shown in Figure 2, it is possible to perform the voltage outer-loop control, without the current inner-loop control, on the d-axis component $U_{dv}^*$ and the q-axis component $U_{qv}^*$ of the grid-connected reference voltage in the dq coordinate system, to obtain the d-axis component $u_{md}$ and the q-axis component $u_{mq}$ of the modulated voltage.

Finally, in step S104, the grid-side converter of the wind turbine generator system is controlled based on the virtual internal potential phase $\theta$, and the d-axis component $u_{md}$ and the q-axis component $u_{mq}$ of the modulated voltage, to adjust an injection voltage at a grid connection point of the wind turbine generator system.

According to an embodiment of the present disclosure, the d-axis component $u_{md}$ and the q-axis component $u_{mq}$ of the modulated voltage may be converted, based on the virtual internal potential phase $\theta$ in the dq coordinate system, into a three-phase voltage in an abc coordinate system or a two-phase voltage in an $\alpha\beta$ coordinate system. For example, as shown in Figure 2, the d-axis component $u_{md}$ and the q-axis component $u_{mq}$ of the modulated voltage may be converted, by means of a coordinate conversion module, into a three-phase voltage in the abc coordinate system or a two-phase voltage in the $\alpha\beta$ coordinate system based on the virtual internal potential phase $\theta$ in the dq coordinate system. Then, the three-phase voltage in the abc coordinate system or the two-phase voltage in the $\alpha\beta$ coordinate system is inputted into a SVPWM (Space Vector Pulse Width Modulation) module for a space vector pulse width modulation. The three-phase or two-phase voltage after the space vector pulse width modulation may be inputted into the grid-side converter, and then utilized for adjusting the injection voltage at the grid connection point of the wind turbine generator system.

In the method according to the embodiment of the present disclosure, the parameters of the virtual inertia damping link (i.e., the virtual inertia coefficient $K_J$ and the virtual damping coefficient $K_D$) are determined based on the rotational inertia and the damping coefficient of the wind turbine generator of the wind turbine generator system. Therefore, a parameter of a quasi-inertial damping link changes with the rotational speed of the wind turbine generator, which reflects a true inertia level and damping level of the rotor motion of the wind turbine generator. Hence, a good balanced energy delivery in a real inertia support is achieved.

A method for determining the virtual inertia coefficient $K_J$ and the virtual damping coefficient $K_D$ based on the rotational inertia and the damping coefficient of the wind turbine generator is described in detail below.

A rotor motion equation of a virtual synchronous generator may be expressed as:

$$J \cdot \frac{d\omega_m}{dt} + D \cdot \omega_m = T_m - T_e$$

In the above equation, J represents a rotational inertia of the synchronous generator, D represents a damping coefficient of the synchronous generator, $\omega_m$ represents a rotational speed of the synchronous generator, $T_m$ represents a mechanical torque of the synchronous generator, and $T_e$ represents an electromagnetic torque of the synchronous generator.

A rotor motion equation of a wind turbine generator may be expressed as:

$$J_w \cdot \frac{d\omega_w}{dt} + D_w \cdot \omega_w = T_{wind} - T_{e\_w}$$

In the above equation, $J_w$ represents a rotational inertia of the wind turbine generator, $D_w$ represents a damping coefficient of the wind turbine generator, $\omega_w$ represents a rotational speed of the wind turbine generator, $T_{wind}$ represents a mechanical torque of the wind turbine generator, and $T_{e\_w}$ represents an electromagnetic torque of the wind turbine generator.

Assuming that a ratio of the rotational speed of the synchronous generator to the rotational speed of the wind turbine generator is $n=\omega_m/\omega_w$, the rotor motion equation of the wind turbine generator may be mapped to the rotor motion equation of the virtual synchronous generator of the grid-side converter:

$$J_w \cdot \frac{d\left(\frac{\omega_m}{n}\right)}{dt} + D_w \cdot \frac{\omega_m}{n} = T_{wind} - T_{e\_w}$$

Through a transformation on the equation, the rotor motion equation of the virtual synchronous generator may be obtained as:

$$\frac{J_w}{n} \cdot \frac{d\omega_m}{dt} + \left(\frac{D_w}{n} - \frac{J_w}{n^2} \cdot \frac{dn}{dt}\right) \cdot \omega_m = T_{wind} - T_{e\_w}$$

Hence, the virtual inertia coefficient $K_J$ and the virtual damping coefficient $K_D$ are determined as:

$$K_J = \frac{J_w}{n};$$

$$K_D = \frac{D_w}{n} - \frac{J_w}{n^2} \cdot \frac{dn}{dt}$$

As can be seen, the virtual inertia coefficient $K_J$ may be determined based on the rotational inertia $J_w$ of the wind turbine generator and the ratio n of the rotational speed of the virtual synchronous generator to the rotational speed of the wind turbine generator, and the virtual damping coefficient $K_D$ may be determined based on the rotational inertia $J_w$ of the wind turbine generator, the damping coefficient $D_w$ of the wind turbine generator, and the ratio n of the rotational speed of the virtual synchronous generator to the rotational speed of the wind turbine generator.

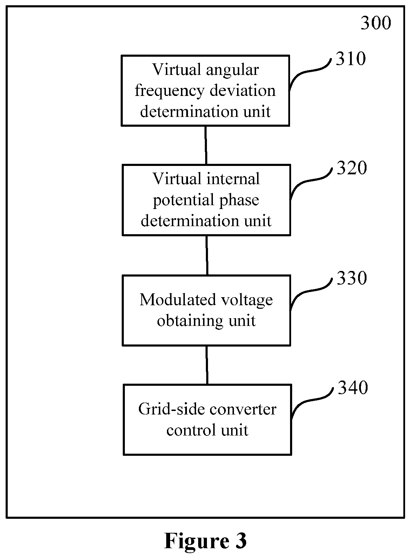

Figure 3 is a block diagram of an apparatus for controlling a voltage-source-type wind turbine generator system according to an embodiment of the present disclosure. The apparatus may be implemented in or as a main controller, a converter controller or other controllers of a wind turbine generator system.

Reference is made to Figure 3. The apparatus 300 for controlling a voltage-source-type wind turbine generator system may include a virtual angular frequency deviation determination unit 310, a virtual internal potential phase determination unit 320, a modulated voltage obtaining unit 330 and a grid-side converter control unit 340. Here, the wind turbine generator system may be a voltage-source-type wind turbine generator system, but the present disclosure is not limited thereto.

The virtual angular frequency deviation determination unit 310 may be configured to determine a virtual angular frequency deviation $\Delta\omega$ by means of a virtual inertial damping link, based on a deviation between a measured value of a DC bus voltage $u_{dc}$ of the wind turbine generator system and a reference value of the DC bus voltage $u_{dcref}$ of the wind turbine generator system. One or more parameters of the virtual inertial damping link may be determined based on a rotational inertia and a damping coefficient of a wind turbine generator of the wind turbine generator system. As mentioned above, the parameters of the virtual inertia damping link may include a virtual inertia coefficient $K_J$ and a virtual damping coefficient $K_D$. The virtual inertia coefficient $K_J$ and the virtual damping coefficient $K_D$ may be determined based on a rotational inertia $J_w$ and a damping coefficient $D_w$ of the wind turbine generator by mapping a rotor motion equation of the wind turbine generator to a rotor motion equation of a virtual synchronous generator of a grid-side converter. Specifically, the virtual inertia coefficient $K_J$ may be determined based on the rotational inertia $J_w$ of the wind turbine generator and a ratio n of a rotational speed of the virtual synchronous generator to a rotational speed of the wind turbine generator, and the virtual damping coefficient $K_D$ may be determined based on the rotational inertia $J_w$ of the wind turbine generator, the damping coefficient $D_w$ of the wind turbine generator, and the ratio n of the rotational speed of the virtual synchronous generator to the rotational speed of the wind turbine generator.

Specifically, the virtual angular frequency deviation determination unit 310 may be configured to: perform a proportional integral (PI) operation on the deviation between the measured value of the DC bus voltage $u_{dc}$ of the wind turbine generator system and the reference value of the DC bus voltage $u_{dcref}$ of the wind turbine generator system, to obtain a set value of a DC bus power $P_{DC}$; obtain a power demand $P_w$ of the wind turbine generator based on a torque demand value $T_{demand}{}^*$ of the wind turbine generator and a rotational speed $\omega_w$ of the wind turbine generator; and obtain a grid-side power $P_{grd}$ of the grid-side converter of the wind turbine generator system based on a grid-connected voltage $u_{dq}$ in the dq coordinate system and a filter inductance current $i_{dq}$ in the dq coordinate system. Then, the virtual angular frequency deviation determination unit 310 may be configured to: determine a first active power deviation $\Delta P_{ref}$ based on the set value of the DC bus power $P_{DC}$, the power demand $P_w$ of the wind turbine generator and the grid-side power $P_{grd}$ of the grid-side converter of the wind turbine generator system; and determine a virtual angular frequency deviation $\Delta\omega$ by inputting the first active power deviation $\Delta P_{ref}$ into a virtual inertia damping link.

In another aspect, the virtual angular frequency deviation determination unit 310 may be configured to: perform the proportional integral (PI) operation on the deviation between the measured value of the DC bus voltage $u_{dc}$ of the wind turbine generator system and the reference value of the DC bus voltage $u_{dcref}$ of the wind turbine generator system, to obtain the set value of the DC bus power $P_{DC}$; and input the set DC bus power $P_{DC}$ directly into the virtual inertia damping link to determine a first intermediate virtual angular frequency deviation. In addition, the virtual angular frequency deviation determination unit 310 may be configured to: obtain the power demand $P_w$ of the wind turbine generator based on the torque demand value $T_{demand}{}^*$ of the wind turbine generator and the rotational speed $\omega_w$ of the wind turbine generator; and obtain the grid-side power $P_{grd}$ of the grid-side converter of the wind turbine generator system based on the grid-connected voltage $u_{dq}$ in the dq coordinate system and the filter inductance current $i_{dq}$ in the dq coordinate system. The virtual angular frequency deviation determination unit 310 may be further configured to: determine a second active power deviation based on the power demand $P_w$ of the wind turbine generator and the grid-side power $P_{grd}$ of the grid-side converter of the wind turbine generator system. The virtual angular frequency deviation determination unit 310 may be further configured to: determine a second intermediate virtual angular frequency deviation by inputting the second active power deviation into the virtual inertial damping link. The virtual angular frequency deviation determination unit 310 may be further configured to: determine the virtual angular frequency deviation $\Delta\omega$ based on the first intermediate virtual angular frequency deviation and the second intermediate virtual angular frequency deviation.

The virtual internal potential phase determination unit 320 may be configured to determine a virtual internal potential phase $\theta$ based on the virtual angular frequency deviation $\Delta\omega$. For example, the virtual internal potential phase determination unit 320 may be configured to: determine a virtual angular frequency $\omega$ based on the virtual angular frequency deviation $\Delta\omega$ and a rated angular frequency $\omega_0$ of the grid; and determine the virtual internal potential phase $\theta$ based on the virtual angular frequency $\omega$.

The modulated voltage obtaining unit 330 may be configured to: determine a d-axis component $u_{md}$ of a modulated voltage and a q-axis component $u_{mq}$ of the modulated voltage based on a set value of a reactive power $Q_0$ of the wind turbine generator system, a measured value of the reactive power Q of the wind turbine generator system, and an amplitude $U_0$ of a rated voltage of the grid. Specifically, the modulated voltage obtaining unit 330 may be configured to: determine a disturbance component of an AC bus voltage based on the set value of the reactive power $Q_0$ of the wind turbine generator system and the measured value of the reactive power Q of the wind turbine generator system; and determine a d-axis component $U_{dv}{}^*$ of a grid-connected reference voltage in the dq coordinate system based on the disturbance of the AC bus voltage and an amplitude $U_0$ of a rated voltage of an AC grid. In another implementation, the modulated voltage obtaining unit 330 may be configured to set a q-axis component $U_{qv}{}^*$ of the grid-connected reference voltage in the dq coordinate system to zero. In addition, the modulated voltage obtaining unit 330 may be configured to determine the d-axis component $u_{md}$ of the modulated voltage and the q-axis component $u_{mq}$ of the modulated voltage based on the d-axis component $U_{dv}$* and the q-axis component $U_{qv}$* of the grid-connected reference voltage in the dq coordinate system.

According to an embodiment of the present disclosure, the modulated voltage obtaining unit 330 may be configured to obtain the d-axis component $u_{md}$ and the q-axis component $u_{mq}$ of the modulated voltage by: performing only a voltage outer-loop control on the d-axis component $U_{dv}$* and the q-axis component $U_{qv}$* of the grid-connected reference voltage in the dq coordinate system, or performing the voltage outer-loop control and a current inner-loop control on the d-axis component $U_{dv}$* and the q-axis component $U_{qv}$* of the grid-connected reference voltage in the dq coordinate system.

The grid-side converter control unit 340 may be configured to control the grid-side converter of the wind turbine generator system based on the virtual internal potential phase θ and the d-axis component $u_{md}$ and the q-axis component $u_{mq}$ of the modulated voltage, to adjust an injection voltage at a grid connection point of the wind turbine generator system. Specifically, the grid-side converter control unit 340 may be configured to: convert, based on the virtual internal potential phase θ in the dq coordinate system, the d-axis component $u_{md}$ and the q-axis component $u_{mq}$ of the modulated voltage into a three-phase voltage in an abc coordinate system or a two-phase voltage in an αβ coordinate system; and perform space vector pulse width modulation on the three-phase voltage in the abc coordinate system or the two-phase voltage in the αβ coordinate system. The grid-side converter control unit 340 may be further configured to: control the grid-side converter of the wind turbine generator system by using the three-phase or two-phase voltage after the space vector pulse width modulation, to adjust the injection voltage at the grid connection point of the wind turbine generator system.

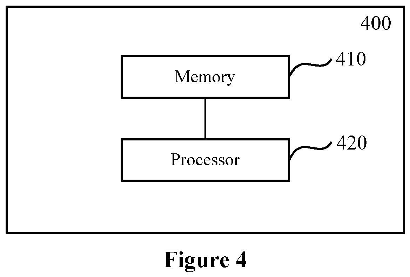

Figure 4 is a block diagram of a computing device according to an embodiment of the present disclosure. The computing device may be implemented in or as a main controller, a converter controller or other controllers of a wind turbine generator system.

Reference is made to Figure 4. A computing device 400 according to an embodiment of the present disclosure may include a processor 410 and a memory 420. The processor 410 may include, but is not limited to, a central processing unit (CPU), a digital signal processor (DSP), a microcomputer, a field programmable gate array (FPGA), a system-on-chip (SoC), a microprocessor, an application specific integrated circuit (ASIC), and the like. The memory 420 stores a computer program to be executed by the processor 410. The memory 420 includes a high-speed random access memory and/or a non-volatile computer-readable storage media. The computer program stored in the memory 420, when executed by the processor 410, causes the method for controlling a wind turbine generator system to be performed as described above.

In an implementation, the computing device 400 may communicate with various components in the wind turbine generator system in a wired/wireless communication manner, and may communicate with a device external to the wind turbine generator system and/or a wind farm in a wired/wireless communication manner.

The method for controlling a voltage-source-type wind turbine generator system according to the embodiments of the present disclosure may be written as a computer program and stored on a computer-readable storage medium. The computer program, when executed by a processor, performs the method for controlling a voltage-source-type wind turbine generator system as described above. Examples of the computer-readable storage media include: a read-only memory (ROM), a random-access programmable read only memory (PROM), an electrically erasable programmable read only memory (EEPROM), a random-access memory (RAM), a dynamic random-access memory (DRAM), a static random-access memory (SRAM), a flash memory, a non-volatile memory, a CD-ROM, a CD-R, a CD+R, a CD-RW, a CD+RW, a DVD-ROM, a DVD-R, a DVD+R, a DVD-RW, a DVD+RW, a DVD-RAM, a BD-ROM, a BD-R, a BD-R LTH, a BD-RE, a Blue-ray or optical disk storage, a hard disk drive (HDD), a solid state Hard disk (SSD), a card storage (such as multimedia card, secure digital (SD) card or XD card), a magnetic tape, a floppy disk, a magneto-optical data storage device, an optical data storage device, a hard disk, a solid state disk and any other devices configured to store a computer program and any associated data, data files and data structures in a non-transitory manner, and provide the computer program and the associated data, data files and data structures to a processor or computer to enable the processor or computer to execute the computer program. In an example, the computer program and any associated data, data files and data structures are distributed over a networked computer system such that the computer program and the associated data, data files and data structures are stored, accessed and executed in a distributed fashion by one or more processors or computers.

With the method and apparatus for controlling a voltage-source-type wind turbine generator system according to embodiments of the present disclosure, the rotor motion equation of the wind turbine generator is analogized to the control strategy of the grid-side converter, achieving the consistency between the rotor motion equation of the virtual synchronous generator and the rotor motion equation of the real wind turbine generator, thereby mapping the real-time rotor motion characteristics of the wind turbine generator to the control strategy of the grid-side converter. In addition, with the method and apparatus according to the embodiments of the present disclosure, by paralleling the phase adjustment function of the analogized rotor motion equation of the virtual synchronous generator with the phase adjustment function of the direct current bus voltage, while achieving the function of the virtual synchronous generator, it has the function of stabilizing the direct current bus voltage and achieves good collaborative control effect without the need for additional devices to stabilize the direct current bus voltage.

Although some embodiments of the present disclosure are shown and described, those skilled in the art should understand that modifications can be made to the embodiments without departing from the principle and spirit of the present disclosure, whose scope is defined by the claims and equivalents thereof.

**Claims**

1. A method for controlling a voltage-source-type wind turbine generator system, comprising:

   determining a virtual angular frequency deviation by means of a virtual inertial damping link, based on a deviation between a measured value of a direct current bus voltage of the wind turbine generator system and a reference value of the direct current bus voltage of the wind turbine generator system, wherein one or more parameters of the virtual inertial damping link is determined based on a rotational inertia and a damping coefficient of a wind turbine of the wind turbine generator system;
   determining a virtual internal potential phase based on the virtual angular frequency deviation;
   determining a d-axis component and a q-axis component of a modulated voltage based on a set value of a reactive power of the wind turbine generator system, a measured value of the reactive power of the wind turbine generator system, and an amplitude of a rated voltage of a grid; and
   controlling a grid-side converter of the wind turbine generator system based on the virtual internal potential phase and the d-axis component and the q-axis component of the modulated voltage, to adjust an injection voltage at a grid connection point of the wind turbine generator system.

2. The method according to claim 1, wherein the determining a virtual angular frequency deviation by means of a virtual inertial damping link comprises:

   performing a proportional integral operation on the deviation between the measured value of the direct current bus voltage of the wind turbine generator system and the reference value of the direct current bus voltage of the wind turbine generator system, to obtain a set value of a direct current bus power;
   obtaining a power demand of the wind turbine based on a torque demand value of the wind turbine and a rotational speed of the wind turbine;
   obtaining a grid-side power of the grid-side converter of the wind turbine generator system based on a grid-connected voltage in a dq coordinate system and a filter inductance current in the dq coordinate system;
   determining a first active power deviation based on the set value of the direct current bus power, the power demand of the wind turbine and the grid-side power of the grid-side converter of the wind turbine generator system; and
   determining the virtual angular frequency deviation by inputting the first active power deviation into the virtual inertia damping link.

3. The method according to claim 1, wherein the determining a first virtual angular frequency deviation by means of a virtual inertial damping link comprises:

   performing a proportional integral operation on the deviation between the measured value of the direct current bus voltage of the wind turbine generator system and the reference value of the direct current bus voltage of the wind turbine generator system, to obtain a set value of the direct current bus power;
   determining a first intermediate virtual angular frequency deviation by inputting the set value of the direct current bus power into the virtual inertia damping link;
   obtaining a power demand of the wind turbine based on a torque demand value of the wind turbine and a rotational speed of the wind turbine;
   obtaining a grid-side power of the grid-side converter of the wind turbine generator system based on a grid-connected voltage in a dq coordinate system and a filter inductance current in the dq coordinate system;
   determining a second active power deviation based on the power demand of the wind turbine and the grid-side power of the grid-side converter of the wind turbine generator system;
   determining a second intermediate virtual angular frequency deviation by inputting the second active power deviation into the virtual inertia damping link; and
   determining the virtual angular frequency deviation based on the first intermediate virtual angular frequency deviation and the second intermediate virtual angular frequency deviation.

4. The method according to claim 1, wherein the determining a d-axis component and a q-axis component of a modulated voltage comprises:

    determining a disturbance component of an alternating current bus voltage based on the set value of the reactive power of the wind turbine generator system and the measured value of the reactive power of the wind turbine generator system;
    determining a d-axis component of a grid-connected reference voltage in the dq coordinate system based on the disturbance of the alternating current bus voltage and an amplitude of a rated voltage of an alternating current grid;
    setting a q-axis component of the grid-connected reference voltage in the dq coordinate system to zero; and
    determining the d-axis component and the q-axis component of the modulated voltage based on the d-axis component and the q-axis component of the grid-connected reference voltage in the dq coordinate system.

5. The method according to claim 4, wherein the determining the d-axis component and the q-axis component of the modulated voltage based on the d-axis component and the q-axis component of the grid-connected reference voltage in the dq coordinate system comprises:
performing merely a voltage outer-loop control on the d-axis component and the q-axis component of the grid-connected reference voltage in the dq coordinate system, or performing the voltage outer-loop control and a current inner-loop control on the d-axis component and the q-axis component of the grid-connected reference voltage in the dq coordinate system, to obtain the d-axis component and the q-axis component of the modulated voltage.

6. The method according to claim 1, wherein the determining a virtual internal potential phase based on the virtual angular frequency deviation comprises:

    determining a virtual angular frequency based on the virtual angular frequency deviation and a rated angular frequency of the grid; and
    determining the virtual internal potential phase based on the virtual angular frequency.

7. The method according to claim 1, wherein

    the one or more parameters of the virtual inertia damping link comprises a virtual inertia coefficient and a virtual damping coefficient; and
    the virtual inertia coefficient and the virtual damping coefficient are determined based on the rotational inertia and the damping coefficient of the wind turbine by mapping a rotor motion equation of the wind turbine to a rotor motion equation of a virtual synchronous generator of the grid-side converter.

8. The method according to claim 7, wherein

    the virtual inertia coefficient is determined based on the rotational inertia of the wind turbine and a ratio of a rotational speed of the virtual synchronous generator to a rotational speed of the wind turbine; and
    the virtual damping coefficient is determined based on the rotational inertia of the wind turbine, the damping coefficient of the wind turbine, and the ratio of the rotational speed of the virtual synchronous generator to the rotational speed of the wind turbine.

9. An apparatus for controlling a voltage-source-type wind turbine generator system, comprising:

    a virtual angular frequency deviation determination unit, configured to determine a virtual angular frequency deviation by means of a virtual inertial damping link, based on a deviation between a measured value of a direct current bus voltage of the wind turbine generator system and a reference value of the direct current bus voltage of the wind turbine generator system, wherein one or more parameters of the virtual inertial damping link is determined based on a rotational inertia and a damping coefficient of a wind turbine of the wind turbine generator system;
    a virtual internal potential phase determination unit, configured to determine a virtual internal potential phase based on the virtual angular frequency deviation;
    a modulated voltage obtaining unit, configured to determine a d-axis component and a q-axis component of a modulated voltage based on a set value of a reactive power of the wind turbine generator system, a measured value of the reactive power of the wind turbine generator system, and an amplitude of a rated voltage of a grid; and
    a grid-side converter control unit, configured to control a grid-side converter of the wind turbine generator system based on the virtual internal potential phase and the d-axis component and the q-axis component of the modulated voltage, to adjust an injection voltage at a grid connection point of the wind turbine generator system.

10. The apparatus according to claim 9, wherein the virtual angular frequency deviation determination unit is configured to:

perform a proportional integral operation on the deviation between the measured value of the direct current bus voltage of the wind turbine generator system and the reference value of the direct current bus voltage of the wind turbine generator system, to obtain a set value of the direct current bus power;
obtain a power demand of the wind turbine based on a torque demand value of the wind turbine and a rotational speed of the wind turbine;
obtain a grid-side power of the grid-side converter of the wind turbine generator system based on a grid-connected voltage in a dq coordinate system and a filter inductance current in the dq coordinate system;
determine a first active power deviation based on the set value of the direct current bus power, the power demand of the wind turbine and the grid-side power of the grid-side converter of the wind turbine generator system; and
determine the virtual angular frequency deviation by inputting the first active power deviation into the virtual inertia damping link.

11. The apparatus according to claim 9, wherein the virtual angular frequency deviation determination unit is configured to:

perform a proportional integral operation on the deviation between the measured value of the direct current bus voltage of the wind turbine generator system and the reference value of the direct current bus voltage of the wind turbine generator system, to obtain a set value of the direct current bus power;
determine a first intermediate virtual angular frequency deviation by inputting the set value of the direct current bus power into the virtual inertia damping link;
obtain a power demand of the wind turbine based on a torque demand value of the wind turbine and a rotational speed of the wind turbine;
obtain a grid-side power of the grid-side converter of the wind turbine generator system based on a grid-connected voltage in a dq coordinate system and a filter inductance current in the dq coordinate system;
determine a second active power deviation based on the power demand of the wind turbine and the grid-side power of the grid-side converter of the wind turbine generator system;
determine a second intermediate virtual angular frequency deviation by inputting the second active power deviation into the virtual inertia damping link; and
determine the virtual angular frequency deviation based on the first intermediate virtual angular frequency deviation and the second intermediate virtual angular frequency deviation.

12. The apparatus according to claim 9, wherein the modulated voltage obtaining unit is configured to:

determine a disturbance component of an alternating current bus voltage based on the set value of the reactive power of the wind turbine generator system and the measured value of the reactive power of the wind turbine generator system;
determine a d-axis component of a grid-connected reference voltage in the dq coordinate system based on the disturbance of the alternating current bus voltage and an amplitude of a rated voltage of an alternating current grid;
set a q-axis component of the grid-connected reference voltage in the dq coordinate system to zero; and
determine the d-axis component and the q-axis component of the modulated voltage based on the d-axis component and the q-axis component of the grid-connected reference voltage in the dq coordinate system.

13. The apparatus according to claim 12, wherein the modulated voltage obtaining unit is configured to:
perform merely a voltage outer-loop control on the d-axis component and the q-axis component of the grid-connected reference voltage in the dq coordinate system, or perform the voltage outer-loop control and a current inner-loop control on the d-axis component and the q-axis component of the grid-connected reference voltage in the dq coordinate system, to obtain the d-axis component and the q-axis component of the modulated voltage.

14. The apparatus according to claim 9, wherein the virtual internal potential phase determination unit is configured to:

determine a virtual angular frequency based on the virtual angular frequency deviation and a rated angular frequency of the grid; and
determine the virtual internal potential phase based on the virtual angular frequency.

15. The apparatus according to claim 9, wherein

the one or more parameters of the virtual inertia damping link comprises a virtual inertia coefficient and a virtual damping coefficient; and
the virtual inertia coefficient and the virtual damping coefficient are determined based on the rotational inertia and the damping coefficient of the wind turbine by mapping a rotor motion equation of the wind turbine to a rotor motion equation of a virtual synchronous generator of the grid-side converter.

16. The apparatus according to claim 15, wherein

the virtual inertia coefficient is determined based on the rotational inertia of the wind turbine and a ratio of a rotational speed of the virtual synchronous generator to a rotational speed of the wind turbine; and
the virtual damping coefficient is determined based on the rotational inertia of the wind turbine, the damping coefficient of the wind turbine, and the ratio of the rotational speed of the virtual synchronous generator to the rotational speed of the wind turbine.

17. The apparatus according to any one of claims 9 to 16, wherein the apparatus is provided in a controller of a converter of the voltage-source-type wind turbine generator system.

18. A computer-readable storage medium storing a computer program, wherein the computer program, when executed by a processor, performs the method according to any one of claims 1 to 8.

19. A computing device, comprising:

a processor; and
a memory storing a computer program, wherein
the computer program, when executed by the processor, performs the method according to any one of claims 1 to 8.

20. A voltage-source-type wind turbine generator system, comprising the apparatus according to any one of claims 9 to 16 or the computing device according to claim 19.

Determine a virtual angular frequency deviation $\Delta\omega$ by means of a virtual inertial damping link, based on a deviation between a measured value of a DC bus voltage $u_{dc}$ of the wind turbine system and a reference value of the DC bus voltage $u_{dcref}$ of the wind turbine system, a torque demand value $T_{demand}{}^*$ of the wind turbine generator and a rotational speed $\omega_w$ of the wind turbine generator, and a grid-connected voltage $u_{dq}$ in the dq coordinate system and a filter inductance current $i_{dq}$ in the dq coordinate system ⟍ S101

Determine a virtual internal potential phase $\theta$ based on the virtual angular frequency deviation $\Delta\omega$ ⟍ S102

Determine a d-axis component $u_{md}$ and a q-axis component $u_{mq}$ of a modulated voltage based on a set value of a reactive power Q0, a measured value of the reactive power Q, and an amplitude $U_0$ of a rated voltage of a grid ⟍ S103

Control the grid-side converter of the wind turbine system based on the virtual internal potential phase $\theta$, and the d-axis component $u_{md}$ and the q-axis component umq of the modulated voltage, to adjust an injection voltage at a grid connection point of the wind turbine system ⟍ S104

**Figure 1**

EP 4 447 250 A1

Grid-side converter

SVPWM

$1/(sK_J+K_D)$

Power limiting

$K_{P\_dc}$

$P_{dc}$

$u_{dc}{}^2$

$+$

$-$

$u_{dcref}{}^2$

$\Delta\omega$

$\theta$

$1/s$

$\omega$

$+$

$\Delta P_{ref}$

$+$ $P_w$

$+$

$+$

$\omega_0$

$-$

$P_{grd}$

$K_{i\_dc}/s$

Coordinate transformation

$3/2(u_{d*}i_d+u_q{}^*i_q)$

$u_{dq}$

$u_{dq}$

$U_{dv}{}^*$ $U_0$

$u_{md}$

$I_d{}^*$

$+$ $+$

$Q_0$

Current inner-loop control

Voltage outer-loop control

$-$

$Q$

$u_{mdq}$

$I_q{}^*$

$u_{mq}$

$U_{qv}{}^*=0$

$i_{dq}$

Current limiting

$i_{gdq}$

$i_{abc}$ $u_{abc}$ $i_{gabc}$

$abc / dq$

$i_{dq}$ $u_{dq}$ $i_{gdq}$

$T_{demand}{}^* * \omega_{wd}$

**Figure 2**

Figure 3

**Figure 4**

## INTERNATIONAL SEARCH REPORT

| | International application No. |
|---|---|
| | **PCT/CN2022/080625** |

**A.  CLASSIFICATION OF SUBJECT MATTER**

H02J 3/24(2006.01)i

According to International Patent Classification (IPC) or to both national classification and IPC

**B.  FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; DWPI; VEN; CNKI; IEEE: 虚拟, 惯量, 惯性, 直流, 母线电压, 阻尼, 角频率, 相位, 相角, 风, 发电机, virtual, inertia, DC, bus voltage, damping, angular frequency, phase, phase angle, wind, generator

**C.  DOCUMENTS CONSIDERED TO BE RELEVANT**

| Category* | Citation of document, with indication, where appropriate, of the relevant passages | Relevant to claim No. |
|---|---|---|
| Y | 贺家发 等 (HE, Jiafa et al.). "适应于弱电网的永磁直驱风电机组虚拟惯量协调控制策略 (A Virtual Inertia Coordinated Control Scheme of PMSG-based Wind Turbines in Weak Grids)" <br> 电力系统自动化 (Automation of Electric Power Systems), <br> Vol. 42, No. 9, 10 May 2018 (2018-05-10), <br> ISSN: 1000-1026, <br> pp. 83-89 | 1-20 |
| Y | 杨涛 等 (YANG, Tao et al.). "含双馈风电场的互联电力系统虚拟惯量与虚拟阻尼协调控制方法 (Coordinated Control Method of Virtual Inertia and Virtual Damping for Interconnected Power System with Doubly-fed Wind Farm)" <br> 电力自动化设备 (Electric Power Automation Equipment), <br> Vol. 11, No. 40, 30 November 2020 (2020-11-30), <br> ISSN: 1006-6047, <br> pp. 92-98 | 1-20 |
| Y | CN 112260290 A (HEFEI UNIVERSITY OF TECHNOLOGY) 22 January 2021 (2021-01-22) <br>   description, paragraphs 77-139, and figures 1-7 | 1-20 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 August 2022** | **26 August 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/080625** |

**C.    DOCUMENTS CONSIDERED TO BE RELEVANT**

| Category* | Citation of document, with indication, where appropriate, of the relevant passages | Relevant to claim No. |
|---|---|---|
| A | WO 2021129914 A1 (VESTAS WIND SYSTEMS A/S) 01 July 2021 (2021-07-01) entire document | 1-20 |
| A | WO 2021219177 A1 (VESTAS WIND SYSTEMS A/S) 04 November 2021 (2021-11-04) entire document | 1-20 |
| A | CN 110962666 A (CHINA ELECTRIC POWER RESEARCH INSTITUTE CO., LTD.) 07 April 2020 (2020-04-07) entire document | 1-20 |
| A | CN 113162035 A (ELECTRIC POWER RESEARCH INSTITUTE OF YUNNAN POWER GRID CO., LTD.) 23 July 2021 (2021-07-23) entire document | 1-20 |

Form PCT/ISA/210 (second sheet) (January 2015)

**INTERNATIONAL SEARCH REPORT**
Information on patent family members

International application No.

**PCT/CN2022/080625**

| Patent document cited in search report | | | Publication date (day/month/year) | Patent family member(s) | Publication date (day/month/year) |
|---|---|---|---|---|---|
| CN | 112260290 | A | 22 January 2021 | None | |
| WO | 2021129914 | A1 | 01 July 2021 | None | |
| WO | 2021219177 | A1 | 04 November 2021 | None | |
| CN | 110962666 | A | 07 April 2020 | None | |
| CN | 113162035 | A | 23 July 2021 | None | |

Form PCT/ISA/210 (patent family annex) (January 2015)